# EUROPEAN PATENT APPLICATION

(11) **EP 2 138 747 A1**
(43) Date of publication of application: **30.12.2009**
(21) Application number: 09250799.5
(22) Date of filing: 20.03.2009
(51) Int. Cl.: F16J 15/32, F01D 11/00

(54) **A sealing device**

(30) Priority: 25.06.2008 GB 0811618
(71) Applicant: Rolls-Royce plc, 65 Buckingham Gate London SW1E 6AT (GB)
(72) Inventor: Wright, Christopher, Bristol BS9 1DP (GB)
(74) Representative: Gunn, Michael Alan

(57) **Abstract**

A gap (6) between a stationary component (2) and a rotating component (4) is sealed by means of a leaf seal comprising leaves (8) having a geometry such that the centre of torsion C_{R} of the leaf (8) is disposed upstream of the centre of pressure C_{P} at the tip (12) of the leaf (8). As a result, the tip region of the leaf (8) is relatively stable when subjected to an air flow F, enabling damaging flutter to be suppressed.

## Description

This invention relates to a sealing device for providing a seal in a gap between first and second components, and is particularly, although not exclusively, concerned with such a device for sealing a gap between a stationary component and a rotating component in a gas turbine engine.

EP 0933567 discloses a leaf seal for use in a gas turbine engine, which comprises a densely packed array of thin resilient strips which are held by an annular carrier fixed to a stationary component of the gas turbine engine. The strips project inwardly from the carrier to contact, or terminate close to, a rotating shaft of the engine. The strips are inclined to the radial direction and can flex in response to radial movement or dimensional change of the shaft so that, together, they maintain a densely packed structure within the gap between the stationary component and the shaft, so as to support a pressure difference across the gap.

Each strip, or leaf, has a leading edge exposed to the high pressure side of the gap and a trailing edge exposed to the low pressure side. The plane of each leaf may be aligned with the axial direction of the shaft, or may be inclined to this direction.

In some circumstances, one or more of the leaves may exhibit flutter. By flutter is meant an unstable portional oscillation of the leaf about an axis extending in the lengthwise direction of the leaf, ie from the fixed end of the leaf held by the carrier and the tip of the leaf adjacent the shaft. Flutter is damaging, and will often ruin the seal. Flutter usually starts locally within the seal; the affected leaves flap with considerable energy and hit adjacent leaves causing damage. If a number of leaves become damaged, the seal with deteriorate. The onset of flutter usually occurs very rapidly.

According to the present invention, there is provided a sealing device for providing a seal in a gap between first and second components, the sealing device comprising an array of leaves, each leaf extending across the gap from a fixed end which is supported with respect to the first component to a tip which contacts or is adjacent to a surface of the second component, each leaf having a leading edge, with respect to the flow direction through the gap, which extends from a first point at the fixed end to a second point at the tip, and having a torsional axis extending from the fixed end to the tip, **characterised in that** the second point is disposed downstream of the first point with respect to the flow direction, such that the chordwise position of the centre of pressure at the tip is at or downstream of the chordwise position of the torsional axis at the tip.

By appropriate configuration of the leaf, particularly with regard to the leading edge, the relationship between the chordwise positions of the centre of pressure and the torsional axis at the tip of the leaf can result in the leaf being stable when air flows through the gap between the high and low pressure regions. Consequently, flutter will be inhibited.

At least part of the leading edge of each leaf may be substantially straight, and in one embodiment, at least part of the leading edge of each leaf is inclined in the flow direction to the perpendicular direction between the first and second components. The leading edge may be inclined over its full extent from the fixed end to the tip of the leaf.

The trailing edge of each leaf may be substantially straight, and may, over at least part of its length, be inclined in the flow direction to the perpendicular direction between the first and second components. At least part of the trailing edge may be inclined in the upstream direction to the perpendicular direction between the first and second components. In a specific embodiment, the trailing edge has a first portion which extends from the fixed end in a direction inclined in the flow direction to the perpendicular direction between the first and second components, and a second portion which extends from the first portion to the tip and is inclined in the upstream direction to the perpendicular direction between the first and second components.

The present invention also provides an assembly comprising a stationary component and a rotor which is rotatable relative to the stationary component, and a sealing device as defined above, the sealing device providing a seal in a gap between the stationary component and the rotor.

Another aspect of the present invention provides a gas turbine engine including an assembly as defined above.

For a better understanding of the present invention, and to show more clearly how it may be carried into effect, reference will now be made, by way of example, to the accompanying drawings, in which:
Figure 1 is a schematic representation of a leaf seal;
Figure 2 is a view in the direction A of the leaf seal of Figure 1;
Figure 3 corresponds to Figure 2 but shows a leaf in accordance with the present invention; and
Figure 4 corresponds to Figure 3, but shows an alternative form of leaf in accordance with the present invention.

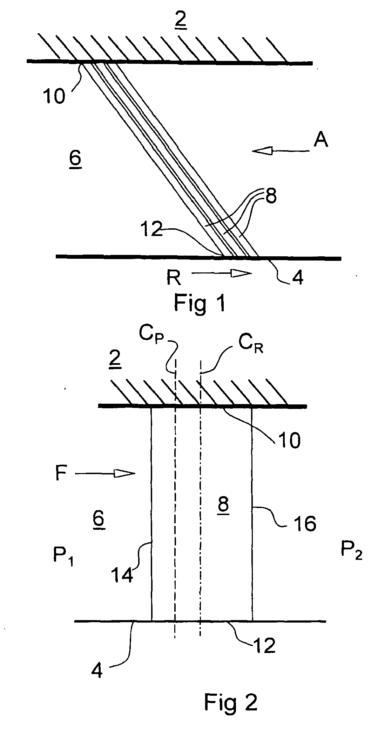

The leaf seal shown in Figures 1 and 2 provides a seal between a stationary component generally indicated at 2 and a rotating component generally indicated at 4. Figure 1 is a view in the axial direction of the rotating component 4, and consequently the surface of the component 4 visible in Figure 1, and the oppositely facing surface of the component 2 are, in reality, curved as viewed in Figure 1, and are represented as straight lines only for the sake of simplicity.

A gap 6 is left between the fixed component 2 and the rotating component 4. This gap 6 is sealed by means of a leaf seal which comprises densely packed flexible leaves 8, for example of steel, which are each fixed at one end 10 to a carrier secured to the fixed component 2. The other end, or tip 12, of each leaf 8 contacts, or at least lies close to, the surface of the rotating component 4.

It will be appreciated that the leaves 8 are inclined to the perpendicular direction across the gap 6 in a direction corresponding to the direction of rotation R of the rotating component 4. In Figure 1, the leaves 8 are shown spaced slightly apart from each other, but in practice they will contact one another over at least part of their lengths, so as to seal across the gap 6 and support a pressure difference between a pressure P₁ and a lower pressure P₂, as shown in Figure 2.

As shown in Figure 2, a conventional leaf 8 is generally rectangular, having leading and trailing edges 14, 16 which lie in respective planes which extend radially of the axis (not shown) of the rotating component 4. The leading edge 14 is exposed to the higher pressure P₁ while the trailing edge 16 is exposed to the lower pressure P₂. Thus, the respective edges 14 and 16 are leading and trailing with respect to the direction of flow across the seal.

Each leaf 8 is clamped rigidly by the carrier which is fixed to the stationary component 2. Each leaf 8 has a centre of torsion, or centre of rotation, C_{R} which is determined by the geometry of the leaf 8. The centre of torsion C_{R} is the axis which experiences no displacement when the tip 12 is twisted relatively to the fixed end 10. In general, the centre of torsion C_{R} is at or close to the geometric centreline of the leaf 8.

Each leaf 8 also has a centre of pressure C_{P} which is the position, in the chordwise direction of the leaf 8, at which acts the pressure generated by an airflow over the leaf 8. In general, the centre of pressure C_{P} is situated approximately 25% of the chordwise width of the leaf 8 from the leading edge 14.

It will be appreciated from Figure 2 that, for a conventional leaf 8, the centre of pressure C_{P} is upstream of the centre of torsion C_{R} with respect to the direction of air flow represented by the arrow F across the seal from the high pressure P₁ to the low pressure P₂. The leaf 8 is consequently unstable, since any deviation of the leaf 8 from perfect alignment with the air flow F will result in a torque being generated in the sense to increase the deviation. The resilience of the leaf 8 will resist deflection, and the leaf 8 will consequently flutter about the centre of torsion C_{R}.

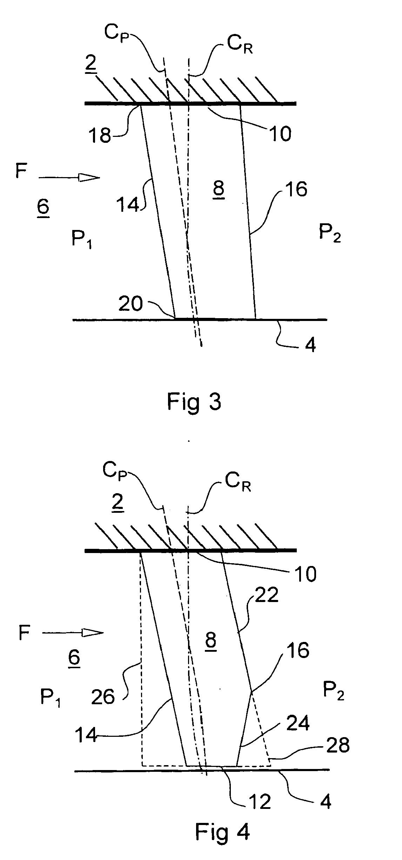

Figure 3 shows an embodiment of a leaf 8 for a leaf seal in accordance with the present invention. The leaf 8 remains of quadrilateral form, but is no longer rectangular. Instead, the leading edge 14 is inclined to the perpendicular direction between the fixed component 2 and the rotating component 4 so that the tip point 20 is downstream of the fixed point 18, with respect to the flow direction F.

The trailing edge 16 is also inclined in the same manner as the leading edge 14, although at a smaller angle to the perpendicular distance between the stationary component 2 and the rotating component 4. Consequently, the leaf 8 as a whole has a generally swept back configuration, in that the leaf 8 is inclined in the downstream direction F from the stationary component 2 to the rotating component 4.

Figure 3 indicates the effect which the changed leaf geometry has on the relative positions of the centre of torsion C_{R} and the centre of pressure C_{P}. It will be appreciated that, at the tip 12, the centre of pressure C_{P} is now situated downstream of the centre of rotation C_{R}. Consequently, at the tip 12, and in the region of the blade between the tip 12 and the point of intersection between the centre of pressure and centre of torsion lines C_{P} and C_{R}, the centre of pressure C_{P} is downstream of the centre of torsion C_{R}. Consequently, the air flow over the leaf 8 in this region will tend to correct any deviation of the leaf 8 from alignment with the airflow F, so damping any tendency to flutter.

It will be appreciated that the required relationship between the centre of pressure C_{P} and the centre of torsion C_{R} can be achieved with configurations of the leading and trailing edges 14,16 different from those shown in Figure 3. For example, the trailing edge 16 could remain parallel to the perpendicular distance between the stationary component 2 and the rotating component 4, or only part of it could be inclined. The leading edge 14 need not be continuously inclined between the fixed point 18 and the tip point 20. For example, the leading edge 14 could be curved, or made up of sections of different angles of inclination.

Figure 4 shows an alternative embodiment of the leaf 8. The leading edge 14 is similar to that of Figure 3, but which has a trailing edge 16 made up of first and second sections 22, 24. The first section 22 is generally parallel to the leading edge 14 while the second section 24 is inclined in the opposite direction from that of the section 22, ie it is directed upstream with respect to the flow direction F so as to reduce the chordwise width of the leaf 8 at the tip 12.

The leading edge 14 is similar to that of Figure 3, and Figure 4 illustrates that the required profile can be achieved by cutting away a triangular section 26 from a leaf 8 having a rectangular profile as shown in Figure 2, at least in the region of the leading edge 14. Figure 4 also illustrates how the section 24 can be achieved by cutting away a triangular section 28 from a leaf as shown in Figure 3, but with a greater angle of inclination of the trailing edge 16.

As shown in Figure 4, the geometry of the leaf 8 has the effect that the centre of torsion C_{R} curves in the downstream direction, with reference to the flow direction F, as it approaches the tip 12. By contrast, the centre of pressure C_{P} initially extends parallel to the leading edge 14, but, owing to the upstream directed section 24 of the trailing edge 16, is deflected towards the leading edge 14, so as to end, at the tip 12, in approximately the same position as the centre of torsion C_{R}.

By appropriate manipulation of the geometry of the leaf 8, the centre of pressure C_{P} and the centre of torsion C_{R} can be made to coincide in the region of the tip 12. Thus, the stability of the leaf 8 can be adjusted so as to avoid flutter while maintaining adequate sealing performance.

As shown in Figure 3, the centre of torsion C_{R} is dominated by the fixing of the leaf 8 at its fixed end 10 but nevertheless will tend to curve in the downstream direction, with reference to the flow direction F, as a result of the downstream sweep of the leaf 8. The centre of pressure C_{P} extends parallel to the leading edge 14 of the leaf 8 from the fixed end 10 to the tip 12.

The amount of curvature of the centre of torsion C_{R} in the downstream direction with respect to the centre of pressure C_{P} is such that, in the region of the tip 12, the chordwise position of the centre of pressure C_{P} is at, or downstream of the centre of torsion C_{R}. Thus, the geometry of the leaf 8 can be manipulated such that the stability of the leaf 8 can be adjusted so as to avoid flutter while maintaining adequate sealing performance.

## Claims

1. A sealing device for providing a seal in a gap (6) between first and second components (2,4), the sealing device comprising an array of leaves, each leaf (8) extending across the gap (6) from a fixed end (10) which is supported with respect to the first component (2) to a tip (12) which contacts or is adjacent to a surface of the second component (4), each leaf (8) having a leading edge (14), with respect to the flow direction (F) through the gap (6), which extends from a first point (18) at the fixed end (10) to a second point (20) at the tip (12), and having a torsional axis (C_{R}) extending from the fixed end 10 to the tip (12), **characterised in that** the second point (20) is disposed downstream of the first point (18) with respect to the flow direction (F), such that the chordwise position of the centre of pressure (C_{P}) at the tip (12) is at or downstream of the chordwise position of the torsional axis (C_{R}) at the tip (12).

2. A sealing device as claimed in claim 1, **characterised in that** at least part of the leading edge (14) of each leaf (8) is substantially straight.

3. A sealing device as claimed in claim 1 or 2, **characterised in that** at least part of the leading edge (14) of each leaf (8) is inclined in the flow direction F to the perpendicular direction between the first and second components (2,4).

4. A sealing device as claimed in claim 3, **characterised in that** the leading edge (14) of each leaf (8) is inclined over its full extent.

5. A sealing device as claimed in any one of the preceding claims, **characterised in that** each leaf (8) has a trailing edge (16).

6. A sealing device as claimed in claim 5, **characterised in that** the trailing edge (16) of each leaf (8) is substantially straight.

7. A sealing device as claimed in claim 5 or 6, **characterised in that** at least part of the trailing edge (16) is inclined in the flow direction (F) to the perpendicular direction between the first and second components (2,4).

8. A sealing device as claimed in any one of claims 5 to 7, **characterised in that** at least part of the trailing edge (16) is inclined in the upstream direction to the perpendicular direction between the first and second components (2,4).

9. A sealing device as claimed in any one of claims 5 to 8, **characterised in that** the trailing edge (16) has a first portion (22) which extends from the fixed end (10) in a direction inclined in the flow direction (F) to the perpendicular direction between the first and second components (2,4), and a second portion (24) which extends from the first portion (22) to the tip (12) and is inclined in the upstream direction to the perpendicular direction between the first and second components (2,4).

10. An assembly comprising a stationary component (2) and a rotor (4) which is rotatable relative to the stationary component (2), and a sealing device as claimed in any one of the preceding claims, the sealing device providing a seal in a gap (6) between the stationary component and the rotor.

11. A gas turbine engine including an assembly as claimed in claim 10.
